# FASCICULE DE BREVET EUROPEEN

(11) **EP 1 652 732 B1**
(45) Date de publication et mention de la délivrance du brevet: **26.11.2008**
(21) Numéro de dépôt: 05291819.0
(22) Date de dépôt: 01.09.2005
(51) Int. Cl.: B60R 19/18, B60R 21/34

(54) **Pièce de carénage de pare-chocs**
Stromlinienförmige Vorrichtung für einen Stossfänger für ein Kraftfahrzeug
Streamlining piece for vehicle bumper

(30) Priorité: 08.10.2004 FR 0410670
(43) Date de publication de la demande: 03.05.2006
(73) Titulaire: Faurecia Bloc Avant, 92000 Nanterre (FR)
(72) Inventeur: Diaw, Baye, 25000 Audincourt (FR)
(74) Mandataire: Jacobson, Claude

(56) Documents cités:
- EP-A- 1 038 732
- EP-A- 1 067 039
- EP-A- 1 369 308
- EP-A- 1 433 664

## Description

La présente invention concerne une pièce de carénage de pare-chocs de véhicule automobile prévue pour être fixée sur la structure du véhicule, comprenant une paroi définissant une face de canalisation d'air sous le pare-chocs, et au moins un bloc d'absorption de choc ayant une structure alvéolaire, solidaire de ladite paroi.

Une telle pièce est par exemple décrite dans le document EP 1 038 732.

Dans une pièce de ce type, les blocs peuvent être prévus pour participer à l'absorption de chocs dits « réparabilité », qui sont des chocs standards répondant aux conditions suivantes : le véhicule percute à environ 16 km/h un obstacle rigide s'étendant sur environ 40% de la largeur de la poutre de pare-chocs. Lors de tels chocs, le châssis du véhicule, et en particulier ses longerons, ne doivent pas être déformés plastiquement, le coût des réparations induites par ce choc frontal devant être limité.

On a constaté que le comportement en déformation d'une telle pièce de carénage lors d'un choc « réparabilité » n'était pas entièrement satisfaisant. La déformation de la paroi, en effet, entraîne une déformation en flexion des blocs d'absorption, préjudiciable à leur efficacité d'absorption en compression axiale.

L'invention a pour but de garantir un fonctionnement optimal des blocs d'absorption lors d'un choc à faible vitesse dit « réparabilité ».

A cet effet, dans une pièce de carénage du type précité, le bloc d'absorption est solidaire de la paroi par l'intermédiaire de parties frangibles sous l'effet d'un choc axial dépassant une intensité prédéterminée sur la pièce de carénage.

Selon d'autres caractéristiques, optionnelles, de l'invention :
- la paroi et le bloc d'absorption sont réalisés d'une pièce, les parties frangibles étant des parties d'affaiblissement de matière, notamment des parties de plus faible épaisseur que la paroi ;
- le bloc d'absorption est prévu dans une région de fixation de la pièce de carénage à la structure du véhicule ;
- la pièce de carénage est prévue pour être fixée en deux régions latérales à deux barres longitudinales respectives du véhicule, et comporte deux blocs d'absorption correspondants, prévus chacun dans une région respective de fixation ;
- la paroi est formée avec des nervures essentiellement longitudinales ;
- la structure alvéolaire du bloc d'absorption est définie par un réseau de cloisons s'étendant, en section, selon deux directions sécantes ;
- lesdites directions sont sensiblement orthogonales, de préférence longitudinale et transversale ; et
- la pièce de carénage est formée d'une pièce en matière plastique.

Un mode particulier de réalisation de l'invention va maintenant être décrit en référence aux dessins annexés, sur lesquels :
- la Figure 1 est une vue schématique, en perspective coupée, d'une partie avant de véhicule automobile comportant une pièce de carénage conforme à l'invention ; et
- la Figure 2 est une vue partielle, en perspective à plus grande échelle, de la pièce de carénage de la Figure 1, et montre plus particulièrement la région de fixation de la pièce de carénage à la structure du véhicule.

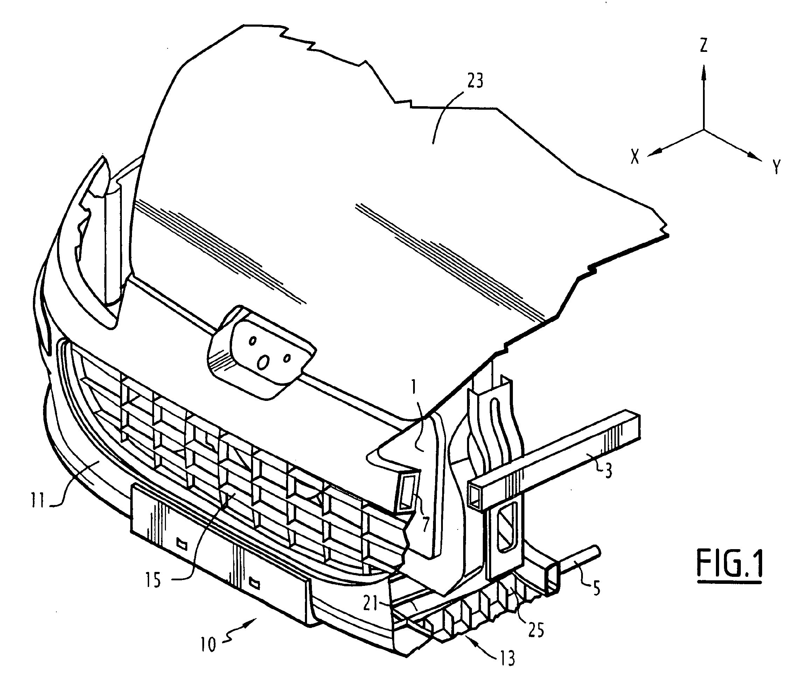

Sur la Figure 1, on a représenté une partie avant de véhicule automobile, orientée selon le système d'axes usuel X, Y, Z, dans lequel :
- l'axe X est l'axe longitudinal du véhicule, orienté d'arrière en avant ;
- l'axe Y est l'axe transversal orienté de la droite vers la gauche, en considérant le sens de marche du véhicule ; et
- l'axe Z est l'axe vertical orienté du bas vers le haut.

Dans toute la description qui va suivre, les termes d'orientation et de position s'entendront par rapport à ce système d'axes.

Cette partie avant de véhicule comprend la façade avant 1 du véhicule, sur laquelle sont montés notamment le radiateur du système de refroidissement, et le (ou les) groupe(s) motoventilateur(s), non représentés.

La façade avant 1 est fixée sur la structure du véhicule, dont on a représenté les parties d'extrémité avant d'un longeron 3, et d'une barre longitudinale ou « prolonge » 5. La prolonge 5 est une barre de structure solidaire du berceau moteur, et s'étend sensiblement longitudinalement, au-dessous du longeron 3.

La partie avant du véhicule, qui est représentée partiellement, comprend également une poutre de pare-chocs 7, fixée à l'extrémité avant du longeron respectif 3, de chaque côté du véhicule.

La partie avant comprend d'autre part un ensemble 10 de carénage du pare-chocs 7, qui comporte lui-même une première pièce de carénage 11 formant peau de pare-chocs, et une deuxième pièce de carénage 13 formant cloison inférieure.

L'ensemble de carénage 10 est fixé à la façade avant 1 et à la structure du véhicule, en particulier au longeron 3 et à la prolonge 5.

La peau de pare-chocs 11 présente une grille d'entrée d'air 15. Lorsqu'elle est montée, la peau de pare-chocs 11 définit une paroi essentiellement verticale, s'étendant à l'avant de la face avant 1, espacée de cette dernière, la poutre de pare-chocs 7 s'étendant transversalement dans l'espace situé entre la peau de pare-chocs 11 et la façade avant 1. La peau de pare-chocs 11 est par exemple réalisée d'une pièce en matière plastique.

La pièce inférieure de carénage 13 comprend une paroi 21 essentiellement plane et qui s'étend essentiellement horizontalement. La paroi 21 peut être fixée au niveau de son bord avant au bord inférieur de la peau de pare-chocs 11, ou être réalisée d'une pièce avec cette dernière. La paroi 21 est reliée à la structure, en l'occurrence aux prolonges 5, en des régions de liaison situées du côté de son bord arrière.

La pièce inférieure de carénage 13 assure la fermeture vers le bas de l'espace compris entre la peau de pare-chocs 11 et la façade avant 1, la paroi 21 définissant une face de canalisation d'air sous la poutre de pare-chocs 7. Plus précisément, la paroi 21 évite le recyclage des flux d'air incidents sur le radiateur ou les GMV, c'est-à-dire la recirculation de ces flux d'air par le bas de la peau de pare-chocs 11. La paroi de guidage d'air 21 évite ainsi une perte d'efficacité du système de refroidissement.

On a également représenté sur la Figure 1 une partie du capot avant 23 du véhicule, qui donne accès au compartiment moteur.

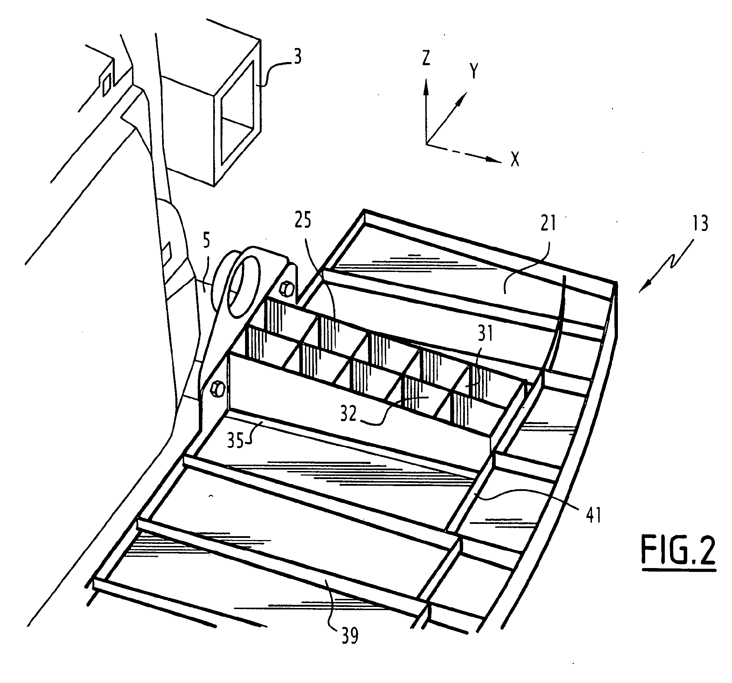

Comme cela et visible sur la Figure 2, la pièce inférieure de carénage 13 comprend en outre un bloc 25 d'absorption de chocs, solidaire de la paroi 21, et s'étendant dans la région de fixation de la pièce de carénage 13 à la prolonge 5.

Naturellement, l'ensemble de carénage 10 est généralement symétrique par rapport au plan médian vertical longitudinal YZ. Dans l'exemple représenté, la pièce 13 de carénage comporte en particulier deux blocs 25 symétriques, du type de celui qui a été représenté. La fixation de la pièce 13 est réalisée au niveau de ces deux blocs 25 sur les deux prolonges latérales 5 respectives. Un seul bloc 25 sera décrit dans ce qui suit.

Le bloc d'absorption 25 fait saillie de la paroi 21 du côté de sa face supérieure, et présente une forme extérieure générale parallélépipédique, allongée longitudinalement. Le bloc 25 a une structure alvéolaire régulière, définie par un réseau de cloisons 31, 32 verticales sécantes, dont certaines 31 sont orientées transversalement, et d'autres 32 sont orientées longitudinalement.

Les compartiments définis par le réseau de cloisons 31, 32, à l'intérieur du bloc 25, peuvent être laissés creux, ou remplis d'un matériau d'amortissement.

Le bloc 25 est relié à la cloison 21 par l'intermédiaire de parties frangibles 35, au niveau desquelles le bloc 25 se désolidarise de la paroi 21 lors d'un choc axial dépassant un seuil prédéterminé sur la pièce de carénage 13. Ce seuil d'intensité prédéterminé correspond à l'intensité d'un choc « réparabilité ».

Dans l'exemple représenté, la paroi 21 et le bloc d'absorption 25 sont réalisés d'une pièce, de préférence en matière plastique moulée, et les parties frangibles 35 sont des parties d'affaiblissement de matière s'étendant le long des cloisons extérieures latérales du bloc 25. Ces parties d'affaiblissement de matière sont par exemple des parties de plus faible épaisseur que la paroi 21, ou en variante, des parties ajourées définissant des discontinuités de matière.

Les parties frangibles 35 peuvent s'étendre sur tout ou partie de la périphérie du bloc 25 en liaison avec la paroi 21.

On notera que le bloc d'absorption 25 s'étend non seulement dans le prolongement de la barre de structure ou prolonge 5, mais est également en contact avec l'extrémité avant de cette dernière. La fixation de la pièce de carénage 13 sur la prolonge 5 est à cet égard réalisée au niveau de la cloison extérieure arrière du bloc, par exemple par vissage, comme cela a été représenté.

Par ailleurs, la paroi 21 est formée avec une série de nervures parallèles longitudinales 39, réparties régulièrement sur la largeur de la paroi 21, et qui font saillie du côté de sa face supérieure.

La paroi 21, du côté de sa face supérieure également, présente en outre des nervures 41 essentiellement transversales, s'étendant à l'avant du bloc 25.

Les nervures 39, 41 ont une hauteur nettement inférieure à celle des cloisons 31, 32 du bloc 25. Elles permettent de rigidifier la paroi 21, et d'améliorer son comportement lors d'un choc standard dit « piéton ».

On comprend que lors d'un choc « réparabilité, la cloison 21 se déforme plastiquement en compression et se désolidarise au moins partiellement des blocs 25, par rupture des parties frangibles 35. Ainsi, la déformation de la paroi 21 n'engendre pas de contrainte en flexion sur les blocs 25, de sorte que leur efficacité en compression axiale n'est pas compromise.

## Revendications

1. Pièce de carénage de pare-chocs de véhicule automobile prévue pour être fixée sur la structure du véhicule, comprenant une paroi (21) définissant une face de canalisation d'air sous le pare-chocs (7), et au moins un bloc (25) d'absorption de choc ayant une structure alvéolaire, solidaire de ladite paroi (21),
**caractérisée en ce que** le bloc d'absorption (25) est solidaire de la paroi (21) par l'intermédiaire de parties (35) frangibles sous l'effet d'un choc axial (X) dépassant une intensité prédéterminée sur la pièce de carénage (13).

2. Pièce de carénage suivant la revendication 1, **caractérisée en ce que** la paroi (21) et le bloc d'absorption (25) sont réalisés d'une pièce, les parties frangibles (35) étant des parties d'affaiblissement de matière, notamment des parties de plus faible épaisseur que la paroi (21).

3. Pièce de carénage suivant la revendication 1 ou 2, **caractérisée en ce que** le bloc d'absorption (25) est prévu dans une région de fixation de la pièce de carénage (13) à la structure (5) du véhicule.

4. Pièce de carénage suivant la revendication 3, **caractérisée en ce qu'**elle est prévue pour être fixée en deux régions latérales à deux barres longitudinales (5) respectives du véhicule, et comporte deux blocs d'absorption (25) correspondants, prévus chacun dans une région respective de fixation.

5. Pièce de carénage suivant l'une quelconque de revendications 1 à 4, **caractérisée en ce que** la paroi (21) est formée avec des nervures (39) essentiellement longitudinales.

6. Pièce de carénage suivant l'une quelconque de revendications 1 à 5, **caractérisée en ce que** la structure alvéolaire du bloc d'absorption (25) est définie par un réseau de cloisons (31, 32) s'étendant, en section, selon deux directions (X, Y) sécantes.

7. Pièce de carénage suivant la revendication 6, **caractérisée en ce que** lesdites directions (X, Y) sont sensiblement orthogonales, de préférence longitudinale (X) et transversale (Y).

8. Pièce de carénage suivant l'une quelconque de revendications 1 à 7, **caractérisée en ce qu'**elle est formée d'une pièce en matière plastique.

## Claims

1. Streamlining piece for a motor vehicle bumper, which piece is intended to be fixed onto the structure of the vehicle and comprises a wall (21) defining a face for channelling air under the bumper (7), and at least one impact-absorbing unit (25) which has a honeycomb structure and is integral with the said wall (21),
**characterised in that** the absorbing unit (25) is integral with the wall (21) via parts (35) which can break under the effect of an axial impact (X) on the streamlining piece (13) that exceeds a predetermined intensity.

2. Streamlining piece according to claim 1, **characterised in that** the wall (21) and the absorbing unit (25) are made in one piece, the breakable parts (35) being material-weakening parts, especially parts with a lower thickness than the wall (21).

3. Streamlining piece according to claim 1 or 2, **characterised in that** the absorbing unit (25) is provided in a region in which the streamlining piece (13) is fixed to the structure (5) of the vehicle.

4. Streamlining piece according to claim 3, **characterised in that** it is intended to be fixed in two lateral regions to two respective longitudinal bars (5) on the vehicle, and comprises two corresponding absorbing units (25) which are each provided in a respective fixing region.

5. Streamlining piece according to any of claims 1 to 4, **characterised in that** the wall (21) is formed with essentially longitudinal ribs (39).

6. Streamlining piece according to any of claims 1 to 5, **characterised in that** the honeycomb structure of the absorbing unit (25) is defined by a network of partitions (31, 32) which extend, in cross-section, in two intersecting directions (X, Y).

7. Streamlining piece according to claim 6, **characterised in that** the said directions (X, Y) are substantially orthogonal, preferably longitudinal (X) and transverse (Y).

8. Streamlining piece according to any of claims 1 to 7, **characterised in that** it is formed from a piece made of plastic material.

## Patentansprüche

1. Verkleidungsteil für die Stoßstange eines Fahrzeugs, vorgesehen, um an der Struktur des Fahrzeugs befestigt zu werden, umfassend eine Wand (21), die eine Seite einer Luftleitung unter der Stoßstange (7) definiert, und mindestens einen eine wabenförmige Struktur aufweisenden, einstückig mit der besagten Wand (21) gebildeten Stoßaufnahmeblock (25), **dadurch gekennzeichnet, dass** der Stoßaufnahmeblock (25) einstückig mit der Wand (21) mittels unter der Auswirkung eines axialen Stoßes auf die Verkleidung, der stärker ist als eine vorgegebene Intensität, zerbrechlicher Teile (35), verbunden ist.

2. Verkleidungsteil nach Anspruch 1, **dadurch gekennzeichnet, dass** die Wand (21) und der Stoßaufnahmeblock (25) einstückig realisiert sind, wobei die zerbrechlichen Teile (35) materialschwächere Stücke, insbesondere Stücke mit einer niedrigeren Dicke als die Wand (21) sind.

3. Verkleidungsteil nach Anspruch 1, **dadurch gekennzeichnet, dass** der Stoßaufnahmeblock (25) in einem Bereich zur Befestigung des Verkleidungsteils (13) an der Struktur (5) des Fahrzeugs vorgesehen ist.

4. Verkleidungsteil nach Anspruch 3, **dadurch gekennzeichnet, dass** es vorgesehen ist, um in zwei seitlichen Bereichen an zwei Längsstangen (5) des Fahrzeuges befestigt zu werden, und zwei entsprechende Stoßaufnahmeblöcke (25) umfasst, die jeweils in einem jeweiligen Befestigungsbereich vorgesehen sind.

5. Verkleidungsteil nach irgend einem der Ansprüche 1 bis 4, **dadurch gekennzeichnet, dass** die Wand (21) mit im Wesentlichen länglichen Rippen (39) gebildet ist.

6. verkleidungsteil nach irgend einem der Ansprüche 1 bis 5, **dadurch gekennzeichnet, dass** die wabenförmige Struktur des Stoßaufnahmeblocks (25) durch einen Netz von Trennwänden (31, 32) definiert ist, die sich im Querschnitt in zwei Sekantenrichtungen (X, Y) erstrecken.

7. Verkleidungsteil nach Anspruch 6, **dadurch gekennzeichnet, dass** die besagten Richtungen (X, Y) im Wesentlichen orthogonal sind, vorzugsweise längst (X) und quer (Y).

8. Verkleidungsteil nach irgend einem der Ansprüche 1 bis 7, **dadurch gekennzeichnet, dass** es einstückig aus Kunststoff geformt ist.
